# EUROPEAN PATENT APPLICATION

(11) **EP 1 435 321 A2**
(43) Date of publication of application: **07.07.2004**
(21) Application number: 03029582.8
(22) Date of filing: 22.12.2003
(51) Int. Cl.: B62D 35/00

(54) **Inflatable and removable aerodynamic fairing for goods vehicles**

(30) Priority: 03.01.2003 IT VA20030001
(71) Applicant: Locatelli, Daniele, 21100 Varese (IT); Timeo, Paolo, 21056 Induno Olona, (Varese) (IT)
(72) Inventor: Locatelli, Daniele, 21100 Varese (IT); Timeo, Paolo, 21056 Induno Olona, (Varese) (IT)
(74) Representative: Sassi, Virginio

(57) **Abstract**

A frame 1, removable, is assembled in front of a container 2 and a frame 3, it also removable, is assembled behind the above-mentioned container 2. The frame 1 keep a inflable fairing 4 and the frame (3) keep a inflable fairing 5.

## Description

The present invention relates to a inflable and removable fairing to reduce the drag (aerodynamic resistance) and, therefore, the waste of fuel, in the carriage of little or not at all aerodynamic bodies like as, for instance, the containers.

At the present state of the art of the carriage containers or big parallelepiped cases on the roads, generally are layed on the platform of a lorry or of a trailer or of a semitrailer of a big capacity towed by a road tractor so-called too articulated or jointed.

Between the back external wall of the driver's cabin of the road tractor and the front external wall of the container there is a distance. During the freight the air threads no flow directly from the aerodynamic surface of the driver's cabin to the external rectilinear surfaces of the container.

They open wide apart insinuates itself in the above mentioned distance where, in conseguence of the velocity, there where generate a depression. There are generate whirls of air and drag of the pair road tractor-container. This involve a bigger needs of power and so a bigger consumpion of fuel, directly proportional to the velocity of the vehicle.

This unfavourable phenomenon is well-known from time, and from time had been invented still fairing assemblables on the frontal surface, in forward direction, of the container. But the container is subject not only at to be carried on lorry and the like, yet often must to be stacked in warehouses, in holds or on decks, or in suitable parkings.

In such phases the fairing is a big hindrance and often is damaged.

Has been invented too other fairing, also it stiff, but assemblible, in erect position, on the platform of the lorry, in the space between the back external wall of the driver's cabin and the front external wall of the container. But too that fairing has inconvenients.

In fact, it is of arduous realization and so has a higt cost. Besides is an encumbrance hindrancing the loading and the unloading of the container on the lorry. Moreover, the aforesaid stiff fairing cause unseemlys to the carrier when during the journey, after unloaded the container, shall be travel empty or with a load with different dimension from the preceding container. In such case the carrier is compelled to find out a steady fixing of the stiff fairing occupying a little space, with little drag, no one danger for the road traffic.

Objectives often difficult to achieve all together.

The invention as claimed is intended to remedy these drawbacks and to offer in addition, various advantages.

It is founded on the principle of carry out a frame which support a flabby pneumatic tire (bladder) with valve. The pneumatic tire, when is pumped up assume the shape of the wished fairing and more suitable for the employment of destination. For instance, if the fairing is destined to the forward part has a rounded form, instead if the fairing is destined to the after part has a tapered form. The frame of support is foldable. When the fairing not serve, the driver, turn on the valve, become flably the bladder, fold up the frame and reduce the ensemble of the fairing to a parcel of modest dimensions easily placeable in some part of the lorry.

These and other abjects and advantages of the present invention will be more readily apparent from a consideration of the following detailed description of the drawing illustrating a preferred embodiment of the invention.

Reffering to the drawing enclosed shall be described more minutely one of the possible forms of practical carrying out showed to simple title of example.

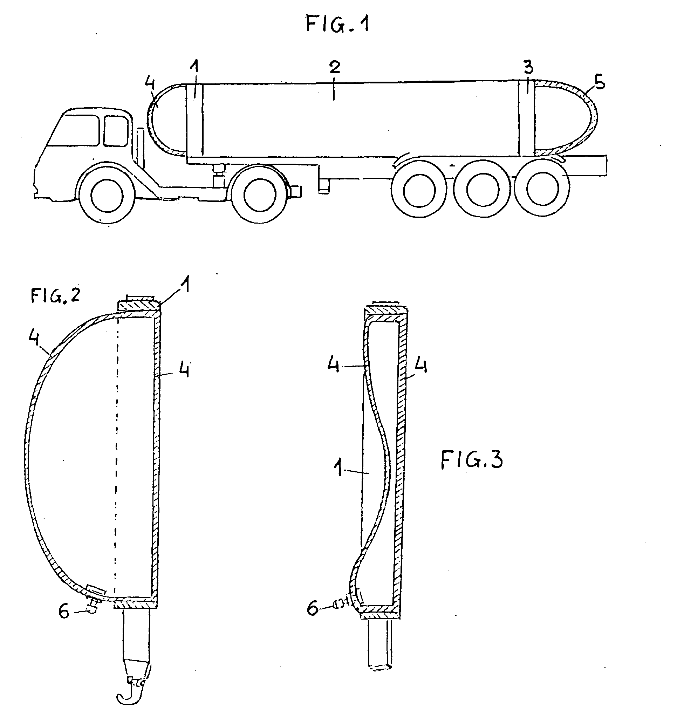

Fig. 1 is a side view of a road tractor, with articulated semitrailer, carrying a container 2. On the forward part of the container 2 is assembled a frame 1. The frame 1 is made of substantially soft material, has the form substantially of a parallelepiped with rectangular base.

The frontal surface of the frame 1 is substantially equal to the forward surface of the container 2 to which substantially stick when the container 2 is fixed on the platform of the articulated semitrailer or like. The container 2 support and keep the bladder 4 with the valve 6.

The bladder 4 has the frontal surface preferably rounded or anyhow suitable to reduce to a minimum the drag. Instead the back surface of the bladder 4 is substantially flat or anyhow equal to the forward surface of the container 2 to whom, for its moderate deformableness, is destined to adhere during the carriage on the lorry or like.

Fig. 2 is a vertical cross-sectional view taken through an ensemple of the bladder 4 contained and supported in the frame 1, in the use stroke that is inflated by air lightly pressed, i.e. bar 0,2 - 0,7.

Fig. 3 is a vertical cross-sectional view taken through the same ansemble of the bladder 4 devoid of air and therefore of reduced volume so to place it flabby too in any small lumber-room.

Again with reference to the fig. 1, we add that on the after or back part of the platform of the articulated semitrailer is assembled a frame 3 substantially like to the above-mentioned frame 1. Also this frame 3 is made of substantially soft material has the form substantially of a parallelepiped with rectangular base. Its frontal surface is substantially equal to the after or back surface of the container to which is substantially get adhere when the same frame 3 is fixed to the container 2 loaded on the articulated semitrailer or like. The frame 3 support and keep the bladder 5. The bladder 5 has the back surface preferably of a tapering form, if that is the case also more tapered as illustrate in fig. 1 and anyhow fit to keep to the minimun the drag. Instead the fore surface of the bladder 5 is substantially flat or anyhow equal to the after or back surface of the container 2 to whom, for moderate deformableness, is destined to adhere during the carriage on the lorry or like. Also the bladder 5 has a valve 6 and in the use stroke that is inflated by air lightly pressed, i.e. bar 0,2 - 0,7 and in the rest stroke is underinflated and treated in the same manner explained for the bladder 4. The bladders 4 and 5 could to be also other forms of the solid geometry, for example the symmetrical or asymmetric spheric segment, the cone, the pyramid and like. They, the bladders, can to be of various materials impermeable to the air, flexible, resistant to the mechanical stress and of the air stream, like for example the "Trevira", a material for the manufacture of the canvas, the rubber, the rubberized canvas and like.

## Claims

1. Removable fairing to reduce the drag (aerodynamic resistence) and, therefore, the waste of fuel, in the carriageof little or not at all aerodynamic bodies like as, for instance, the containers, big parallelepiped cases and like caracterised in that: is inflable and deflatable.

2. A removable fairing (1,4), as claimed in claim 1, that comprises a frame (1) of substantially soft material that support a bladder (4) with a valve (6), where the bladder (4), when is inflated has the form of a spheric segment or like, is assembled on the forward face of a container (2), big parallelepiped case, or like, in order to reduce the drag.

3. A removable fairing (1,4), as claimed in claim 1, that comprises a frame (3) of sustantially soft material that support a bladder (5) with a valve , where the bladder (5), when is inflated has a tapering form, is assembled, with his frame (3), or like, against the back surface of a container (2), big parallelepiped case, or like, in order to reduce the drag.
